# EUROPEAN PATENT APPLICATION

(11) **EP 2 505 063 A1**
(43) Date of publication of application: **03.10.2012**
(21) Application number: 11005865.8
(22) Date of filing: 18.07.2011
(51) Int. Cl.: A21B 7/00, F24C 7/08

(54) **An automated process for preparing and baking bakery products and a related system**

(30) Priority: 01.04.2011 EP 11425086
(71) Applicant: Barilla G. e R. Fratelli S.p.A., 43100 Parma (IT)
(72) Inventor: Riboldi, Giancarlo, I-43058 Sorbolo (Parma) (IT); Torricelli, Roberto, I-43122 Parma (IT); Giovanetti, Marco, I-43123 Parma (IT)
(74) Representative: Ferreccio, Rinaldo

(57) **Abstract**

A process for preparing and baking bakery products is described, comprising the steps of:
a) providing an apparatus (1) for the completely automated processing and subsequent baking of a preparation (100) of base ingredients for bakery products, comprising a chamber (60) for preparing and baking the preparation, mixing means (15) operating within the above-mentioned chamber, heating means (30) of the chamber and control means (40), this apparatus also comprising means for delivering a liquid (80) into the preparation and baking chamber, and reading means (102) directly associated to the apparatus;
b) acquiring a plurality of preparation parameters stored on a support (101) associated with the preparation by means of reading means (102);
c) transmitting these preparation parameters to control means (40);
d) putting the ingredients of the preparation (100) into the preparation and baking chamber (60);
e) operating, through control means (40), liquid delivery means (80) in order to introduce a quantity of liquid identified by preparation parameters into the preparation and baking chamber;
f) operating, through control means (40), mixing means (15), obtaining a mixture from the ingredients and the liquid put into the preparation and baking chamber (60);
g) operating, through control means (40), heating means (30) according to modes identified by the preparation parameters, baking the previously obtained mixture;

wherein:
the step f) of operating said mixing means (15) brings about the execution of a first slow mixing step f) for 2-8 minutes at 20-40 rpm, a second fast mixing step f") for 20-40 minutes at 60-100 rpm e and third slow mixing step f''' for 2-4 minutes at 20-40 rpm.

## Description

### Field of application

The present invention relates to the food industry field.

In particular, the invention relates to the bakery product industry field and it concerns an automated process for preparing and baking bakery products, such as bread, focaccias and the like, as well as a system for implementing this process.

### Prior art

The electrical household appliance market has been offering since a long time apparatus for preparing bakery products, such as mixer ovens intended to produce bread and the like. These apparatuses, although having a reduced size intrinsic with domestic use, integrate inside them the functions of a mixer and an oven, in order to be able to perform almost automatically all the operations necessary to obtain a bakery product starting from flour, water and leaven, with possible additional ingredients.

In particular, the apparatus in question have a container, located within a baking chamber, equipped with one or more mixing blades operated by an electric motor. Putting the flour and possible other ingredients into the container and subsequently starting the electric motor thus allow a dough to be obtained; once a possible leavening step has lapsed, suitable heating means raise the temperature within the baking chamber in order to bake the obtained mixture. An electronic control unit, being programmable by the operator, automatically controls the above-mentioned steps.

Although these apparatus considerably simplify the preparation process of a bakery product, they require however a series of preliminary operations to be performed by the operator, such as putting the required amount of water for the correct mixing of the ingredients and programming the apparatus on the basis of the recipe desired by the user. Another operation that has proven to be useful is the removal of the mixing blades before the leavening and baking steps, so as to avoid that the same become entrapped in the finished bakery product. It must also be noted that different bakery products, obtainable from different flours, imply different mixing, leavening and baking times and modes. Moreover, also the relative quantity of water or other liquids to be added in order to obtain the mixture can considerably vary from one recipe to another. An operator intending to try new recipes, when lacking the necessary experience, will have difficulties in evaluating the optimum quantities and preparation parameters, thus risking to be in for disappointing results.

Moreover, the organoleptic and structural characteristics of bakery products obtained by means of these apparatus are often far from those of similar bakery products prepared in traditional bakeries or rather, in the specific case of bread, only certain kinds of bread can be obtained, such as sandwich loaf, characterized by a high ratio between crumb and crust. In any case, the characteristics of crust crunchiness, surface colouring and open and irregular alveolation being typical of bread produced in artisan bakeries can be hardly reproduced.

The technical problem underlying the present invention is to provide an automated process for preparing and baking bakery products by means of an automatic apparatus, allowing the above-mentioned technical problems to be solved, limiting to a minimum the operator's intervention and ensuring a proper preparation and baking, irrespective of the skill of the latter.

### Summary of the invention

The above-mentioned technical problem is solved by a process for preparing and baking bakery products comprising the steps of:
a) providing an apparatus for the completely automated processing and following baking of a preparation of base ingredients for bakery products, comprising a chamber for preparing and baking the preparation, mixing means operating within said preparation and baking chamber, heating means of said preparation and baking chamber and control means, this apparatus also comprising means for delivering a liquid into said preparation and baking chamber, and reading means directly associated to said apparatus;
b) acquiring a plurality of preparation parameters stored on a support associated with the preparation by means of said reading means;
c) transmitting said plurality of acquired preparation parameters to said control means;
d) putting the preparation ingredients into said preparation and baking chamber;
e) operating, through said control means, said liquid delivery means in order to introduce a quantity of liquid identified by the preparation parameters into said preparation and baking chamber;
f) operating, through said control means, said mixing means, to obtain a mixture from the ingredients and the liquid introduced into the preparation and baking chamber;
g) operating, through control means, said heating means according to modes identified by said preparation parameters, to bake the previously obtained mixture;
wherein:
said step f) of operating said mixing means brings about the execution of a first slow mixing step f') for 2-8 minutes at 20-40 rpm, a second fast mixing step f") for 20-40 minutes at 60-100 rpm and a third slow mixing step f''' for 2-4 minutes at 20-40 rpm.

Preferably, the step g) of operating said heating means involves a starting step of fast thermal increase in order to bring the temperature of said preparation and baking chamber to 165°C-220°C. This temperature is preferably reached in about 3-8 minutes.

According to an aspect of the present invention, when said preparation of base ingredients for bakery products is a preparation for bread, focaccias or similar bakery products obtained through leavening with natural yeast, the process according to the invention comprises, between said step f) of operating the mixing means and said step g) of operating the heating means, a step of leavening the mixture within the preparation and baking chamber, carried out at 30-38°C for a time of 60-180 minutes.

Said preparation of base ingredients for bakery products comprises, within a package externally provided with said support whereon said preparation parameters are stored, at least one cereal meal and salt, as well as further ingredients varying according to the bakery product to be prepared.

When the preparation is used to prepare bread or focaccias, said cereal meal is based on soft or durum wheat flour, but it can also comprise variable quantities of one or more meals of other cereals, such as for example barley, rice, corn, rye, oats, spelt, kamut. Moreover the preparation can also comprise legume flours, particularly soya. Finally, this preparation can comprise additional ingredients, such as dextrose, dextrins, malt and powdered sourdough.

When the preparation is used to prepare cakes, obtained in particular from batters, it will comprise, besides at least a cereal meal and salt, sugar and one or more ingredients chosen among those commonly used to prepare cakes and similar sweets, such as for example starch (of wheat or corn), potato starch, powdered milk, low-fat cocoa powder, natural flavourings and milk proteins, as well as baking powder (for example gluconodeltalactone, sodium acid carbonate and disodium diphosphate)

The above-mentioned preparation parameters identify the mixing and heating times and modes within the preparation and baking chamber.

These preparation parameters can also identify the modes of a possible pre-heating of the preparation and baking chamber while processing the products contained therein.

When the bakery product is prepared from a mixture (dough) leavened by means of natural yeast, said preparation parameters also identify the leavening times of this mixture.

Preferably, preparation parameters also identify the quantity of liquid to be added to the preparation ingredients in order to obtain the mixture. Liquid delivery means comprise, according to one embodiment, a liquid tank, being connected to the preparation and baking chamber by means of a duct, and a pump for feeding liquid through this duct towards the preparation and baking chamber. The addition of liquid, typically water, occurs when mixing begins in a period comprised between 30 and 180 seconds.

According to an aspect of the process according to the present invention, reading means directly associated to the apparatus comprise an RFID reader, and the support associated to the preparation comprises an RFID label.

According to a further aspect of the present invention, mixing means comprise a mixing blade which can be rotationally operated within a substantially cylindrical container located within the preparation and baking chamber, along an axis of rotation that is perpendicular to a bottom plane thereof, that mixing blade being hinged near the bottom plane of the container along a hinging axis that is perpendicular to the axis of rotation by means of a hinge, which allows the mixing blade to move angularly from an operational position wherein the mixing blade stands upright with respect to the container bottom plane and a rest position wherein the mixing blade is lying on the container bottom plane and vice versa, retaining means being arranged to limit that angular movement to prevent the mixing blade from rotating with respect to the hinging axis beyond the operational position.

According to a further aspect, the present invention relates to a system for implementing the above-illustrated process, according to claims 14-18.

### Brief description of the drawings

- Figure 1 is a schematic sectional view along a vertical plane of an apparatus for implementing the process according to the present invention;
- Figure 2 is a perspective view of a component of said apparatus according to a preferred embodiment, arranged in a first configuration;
- Figure 3 is a perspective view of the component of Figure 2 arranged in a second configuration.

### Detailed description of a preferred embodiment

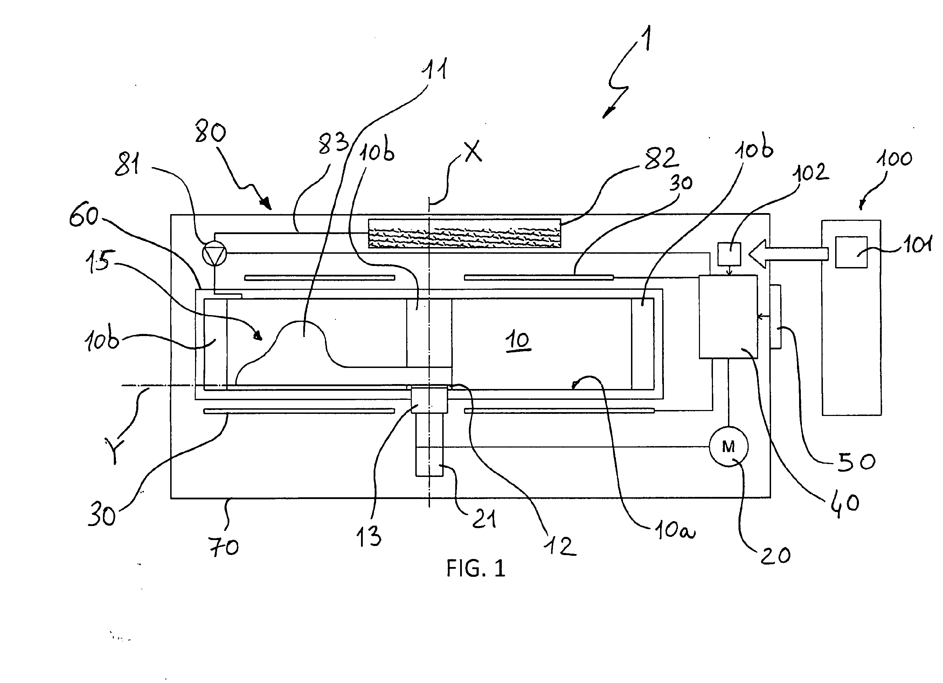

With reference to Figure 1, an apparatus for implementing the method according to the invention has been identified with reference number 1.

This apparatus 1 comprises an external housing 70 inside which a preparation and baking chamber 60 is defined. In this preparation and baking chamber 60 a cylindrical container 10 is removably placed, arranged to receive a preparation of food ingredients, comprising for example a cereal meal and possible other dry ingredients. In Figure 1 this preparation is generally indicated with reference number 100.

In the example, the preparation chamber has an internal cavity that fully resembles the one being typical of traditional ovens.

The operations of water addition to the preparation, mixing, possible leavening and subsequent baking of the processed preparation are performed in the container 10. These steps are performed automatically by a plurality of means operating within the preparation and baking chamber 60.

In particular the apparatus 1 comprises liquid delivery means 80 intended for filling up the container 10 with the quantity of water being suitable for allowing the preparation ingredients to be properly amalgamated; processing means 15 intended for the mixing and/or kneading step and heating means 30 intended for the final baking of the processed preparation.

Liquid delivery means 80 comprise in this case a liquid tank 82, placed within the external housing 70, connected to the preparation and baking chamber 60 by means of a duct 83. A pump 81 allows the liquid to be fed through the duct 83 into the preparation and baking chamber 60. In particular the duct 83 is shaped in such a way that, when the container 10 is positioned within the preparation and baking chamber 60, the output liquid flows into the container 10, gradually filling it up. It must be noted that the liquid tank 82 is preferably arranged to contain water, which is used in most of food product preparations.

In this case heating means 30 take the form of one or more resistors and a fan (the latter not being shown). Resistors serve to raise the temperature within the preparation and baking chamber 60, so that the apparatus can perform the oven function for which it is intended.

Finally, processing means 15 comprise an electric motor 20, a mixing blade 11 and the kinematical connection means being described hereafter. The electric motor 20 is placed within the external housing 70 in a recess separate from the preparation and baking chamber 60, possibly thermally insulated with respect to the latter. Said electric motor 20 is kinematically connected, for example by means of a belt drive, to a shaft 21 rotating along a vertical axis of rotation X. The upper part of said shaft 21 faces the bottom of the preparation and baking chamber 60, and it has a coupling profile intended to allow it to be engaged with another element.

The bottom wall is crossed, in a central point thereof, by a hole housing an insert 13, which can rotate with respect to the container 10. The rotating insert 13 has a lower coupling profile intended to engage with the coupling profile of the shaft 21, allowing to realise a kinematical coupling between the two elements when the container 10 is properly inserted inside the preparation and baking chamber 60.

An end of the mixing blade 11 is attached to the rotating insert 13 of the container 10; from this end the mixing blade mainly extends in a radial direction towards the side wall of the container 10.

The mixing blade 11 has a substantially planar profile, having a thickness comprised between 1 mm and 5 mm and thus presenting two opposed plane faces. An upper edge of the blade has a curved profile, provided with a protuberance 11d that is higher at its peripheral end; a lower rectilinear edge 11a thereof is instead positioned so as to graze a bottom plane 10a of the container 10.

When the container 10 is properly placed within the preparation and baking chamber 60, the rotating insert 13 engages with the shaft 21 creating a kinematical connection between the electric motor 20 and the mixing blade 11. The mixing blade 11 can then be rotated by the electric motor 20 according to the previously identified vertical axis of rotation X.

The apparatus 1 comprises control means 40 of the means for the automatic execution of the operations of preparation processing and baking, such as liquid delivery means 80, heating means 30 and processing means 15. These control means 40 take the form of an electronic control unit, arranged to send operation commands to the pump 81, the thermal plates 30 and the electric motor 20 respectively.

A control interface 50 allowing an operator to set and operate the apparatus 1 is suitably connected to the electronic control unit 40.

According to the present invention, the apparatus 1 also comprises reading means 102, arranged to acquire a plurality of preparation parameters stored on a support 101 associated to the ingredient preparation 100.

In the preferred embodiment here described, the reading means 102 and the support 101 define a radio-frequency identification system (RFID). Reading means thus take the form of an RFID reader being capable to interrogate the support 101, composed of an RFID label associated with the external housing of a package of the ingredient preparation 100. The RFID label 101 preferably comprises a passive transponder provided with a read-only memory.

Preparation parameters are stored in this memory, i.e. parameters concerning the specific preparation modes of the related ingredient preparation 100.

The RFID reader 102 is electronically connected with the electronic control unit 40, so that the preparation parameters detected by interrogating the RFID label 101 can be transmitted in the form of a signal to this unit.

By processing the signal received, the electronic control unit 40 is thus able to convert preparation parameters into a series of operation commands that are sequentially given to the pump 81, the thermal plates 30 and the electric motor 20.

The preparation parameters acquired by the RFID reader 102 can concern the quantity of liquid to be added to the ingredients of the preparation 100 put into the container 10, the duration and the features of the steps of mixing, possible leavening and finally baking, as will become clearer from the following description of embodiments of the process according to the invention.

According to a preferred embodiment, the container 10 has a substantially cylindrical shape defined by a side wall and by a bottom wall, which defines internally the bottom plane 10a. A plurality of semicylindrically shaped impressions 10b protrude along the internal profile of the side wall. More particularly there are four shaped impressions, equidistant among each other along the profile of the side wall.

The mixing blade 11 has a front face 11b and an opposite rear face 11c connected to the rotating insert 13 of the container 10 by means of a hinge 12.

The hinge 12 also allows the mixing blade 11 to move angularly along a radial hinging axis Y with respect to the container 10; this axis therefore extends orthogonally with respect to the axis of rotation X of the blade 11.

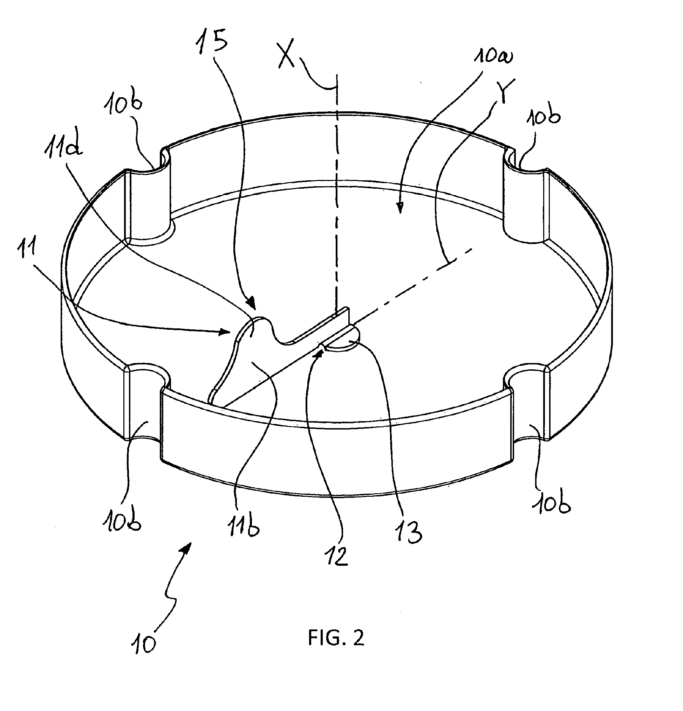

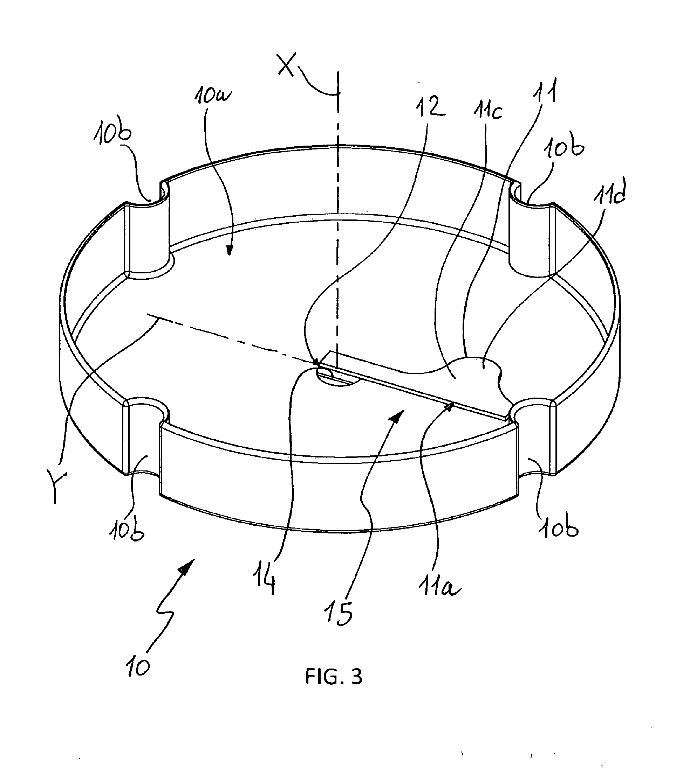

The angular movement along the hinging axis Y allows the mixing blade 11 to rotate between an unfolded operational position (Fig.2) and a folded rest position (Fig.3).

In the operational position, shown in figure 2, the mixing blade 11 stands upright with respect to the bottom plane of the container 10a, forming with said plane a substantially right angle. In this position the mixing blade 11 is able to perform the actual mixing operation of the ingredients put into the container 10.

In particular, the mixing blade 11 is shaped in such a way that, in said operational position, the lower edge 11a thereof grazes the bottom plane 10a of the container 10 when the blade itself moves in rotation.

Moreover, the mixing blade 11 radially extends so as to pass near the shaped impressions 10b of the container during its rotation. In this way the blade cooperates with these impressions in order to obtain a better mixing.

In the rest position, shown in figure 3, the mixing blade 11 is folded so as to lie on the bottom plane 10a of the container 10. In this position the mixing blade 11 cannot perform mixing operations; on the other hand this position is advantageous for the subsequent possible leavening of bakery products and the subsequent baking of the mixture that has just been processed, since the folded mixing blade 11 lies flat underneath the mixture, so as to ensure that the bakery product at the end of the baking time does not present any cavity at the location of the blade, as it typically happens in traditional apparatuses.

The angular movement of the mixing blade 11 along the hinging axis Y is limited on the one side by the impact of the front face 11b of the blade against the bottom plane 10a of the container 10, on the other side by retaining means arranged to prevent the operational position to be overtaken during the unfolding of the blade.

In this particular case, these retaining means take the form of a stopping shoulder 14 created on the rotating insert 13, against which a portion of the rear face 11c abuts when the mixing blade 11 is in the operational position.

Operationally, the above-mentioned apparatus for preparing a bakery product 1 can be used to prepare a bakery product according to the process of the invention as described hereafter.

In a preliminary step of acquiring preparation parameters, the operator brings the RFID label 101 associated with the ingredient preparation close to the RFID reader 102, which is operated by the control interface 50. Upon activation, the RFID reader 102 interrogates the RFID label 101 obtaining the parameters for preparing the recipe related to the particular preparation to be processed and baked, parameters which are then transmitted to the electronic control unit 40 which temporarily stores them in a volatile memory.

In an ingredient arrangement step, the ingredients comprised within the preparation package 100, intended to produce a particular mixture for a bakery product, for example a bread dough, are put within the container 10. This step is also preferably performed by a human operator, who can extract the container 10 from the preparation and baking chamber 60 to facilitate the insertion of the ingredients.

When a leavening of the mixture by means of natural yeast is foreseen, the latter shall be added by the operator into the container 10 in the prescribed quantity.

Once the insertion of the ingredients is completed, the operator must in any case properly place the container 10 back into the preparation and baking chamber 60, taking care to check that the rotating insert 13 is engaged on the shaft 21.

At the end of this step, the operator can activate the apparatus 1 by means of the control interface 50, so that the subsequent steps are performed in a fully automatic way by the apparatus 1. From now on the apparatus 1 will then operate according to the previously acquired preparation parameters.

In a first water addition step, the electronic control unit 40 controls the pump 81 in order to add the right quantity of water set by the preparation parameters.

A possible pre-heating step follows, wherein the electronic control unit 40 can activate heating plates 30 in order to bring all the ingredients inside the container 10 to a temperature suitable for processing or mixing. The need for this step and the intensity of plate activation is dictated by the control unit 40 in function of the preparation parameters acquired by reading the RFID label 101.

In a subsequent mixing step, the electronic control unit 40 operates the electric motor 20 in order to bring the mixing blade 11 into rotation with respect to the axis of rotation X. The duration of this mixing step is adjusted by the preparation parameters; moreover these parameters also define the rotation speed of the mixing blade 11, the electric motor 20 being equipped with an inverter or with other electronic means for speed adjustment.

If the mixing blade 11 is of the folding type, it is operated in a first direction of rotation during the real mixing step, after which the blade 11 is operated in the opposite direction for a limited length to allow the blade to be folded.

The first direction of rotation is such that the mixing blade 11, in the operational position, moves in the direction going from its rear face 11c to its front face 11b, in the example of figures 2 and 3 counterclockwise. It is thus the front face 11b that exerts a pressure on the ingredients to be mixed during the operation.

When it is operated in rotation, the mixing blade 11 can be in the operational position (upright) or in the rest position (lying).

When the blade is in the operational position, the pressure of the ingredients on the front face 11b thereof and the opposite constraining action of the stopping shoulder 14 contribute to keep it in such a position.

Moreover, since the mixing blade 11 extends radially so as to pass near the container shaped impressions 10b during the rotation thereof, it actively cooperates with these impressions, leading to a more intense and effective mixing.

On the contrary, when it is in the rest position, the pressure of the ingredients on the edge of the blade, in combination with the rotation of the blade 11, will unfold the blade until it reaches the operational position, in which it is balanced by the above-mentioned constraining action.

In both cases, the mixing blade 11 will be in the operational position, being able to perform its function. The ingredients are then mixed to form a mixture with the desired consistency.

According to the process of the invention, the mixing is performed in three steps with different mixing speeds: a first slow mixing step for 2-8 minutes at 20-40 rpm, a second fast mixing step for 20-40 minutes at 60-100 rpm and a third slow mixing step for 2-4 minutes at 20-40 rpm;

Performing the mixing according to this three-step mode proved critical in order to reach the desired organoleptic and structural features of the final products.

At the end of the mixing step the folding step of the mixing blade 11 is provided.

In this step, the electronic control unit 40 operates the electric motor 20 in counter-rotation with respect to the previous step, thus rotating the mixing blade 11 for a short length, in a direction of rotation that is opposite the previously-determined first direction of rotation, in the example of figures 2 and 3 clockwise.

By operating the blade in counter-rotation, the pressure of the mixture that has been formed no longer acts against the front face 11b of the blade, as in the previous case, but against the rear face 11c thereof. This pressure is no longer balanced by the constraining reaction of the stopping shoulder 14, and this causes therefore the mixing blade 11 to overturn from the operational position to the rest position, wherein the mixing blade 11 settles with its face against the bottom plane 10a of the container. Thanks to this mode of operation the mixing blade 11 will not become trapped in the mixture during the following baking step.

The method then provides a possible resting step intended to allow the mixture to leaven; the duration and the presence of this step are once again set by the preparation parameters stored in the volatile memory of the electronic control unit 40. This step is provided in all cases in which the mixture contains natural yeast. In those cases, the resting step is performed, inside the preparation and baking chamber, at 30-38°C for a period of 60-180 minutes.

Finally a final baking step is provided, wherein the electronic control unit 40 operates the heating resistors 30, with duration and level of intensity set by preparation parameters, so as to perform the final baking of the mixture, in order to obtain the desired bakery product.

The process according to the present invention foresees that the final baking step comprises a starting step of fast thermal increase (in about 3-8 minutes) in order to bring the temperature of said preparation and baking chamber to 165°C-220°C (in particular to 180-220°C for a dough for bread, focaccia and similar naturally leavened bakery products and at 165°-185°C for a batter for cakes and similar sweets).

The present invention will be further illustrated with reference to some embodiments given hereafter by way of non limiting examples.

### EXAMPLE 1 - Durum wheat bread

A bread-mix preparation has been used, comprising, within a polyethylene food package, having externally an RFID label, 350 grams of a mixture based on durum wheat fine semolina (326 grams) and also comprising dextrose (8 grams), salt (8 grams) and powdered sourdough (8 grams).

At the beginning, the RFID label 101 associated to the ingredient preparation has been brought close to the RFID reader 102, operated by the control interface 50. After reading the label by the RFID reader 102, the parameters for preparing the recipe for durum wheat bread have been transmitted to the electronic control unit 40 in order to be temporarily stored in a volatile memory.

The container 10 has then been removed from the preparation and baking chamber 60 and said preparation and dehydrated powdered natural yeast, being separately wrapped under modified atmosphere in an aluminium-clad packet, have been introduced into this container

Once the insertion of the ingredients has been completed, the container 10 has been properly reintroduced into the preparation and baking chamber 60, and the apparatus 1 has been operated by the control interface 50, so that the following steps have been performed in a fully automatic way by the apparatus 1, as a function of the previously acquired preparation parameters.

In a first water addition step, the electronic control unit 40 controlled the pump 81 in order to add the right quantity of water set by the preparation parameters (178 grams), This addition has been performed in about 60 seconds and the mixing has been started simultaneously; the latter has been performed in three subsequent steps: a first slow mixing step at 20 rpm for 2 minutes, a second fast mixing step at 80 rpm for 28 minutes and a third slow mixing step at 20 rpm for 2 minutes.

At the beginning of the mixing step, the electronic control unit 40 operated the electric motor 20 in order to bring the folding mixing blade 11 into rotation with respect to the axis of rotation X. At the end of the mixing step, the blade 11 was operated in the opposite direction for a limited length in order to allow the blade to be folded.

A resting step has then been performed by the electronic control unit 40, always in a fully automated way, in order to allow the dough to leaven, at 35°C for 80 minutes.

Afterwards, the temperature of the preparation and baking chamber has been brought to above 180°C in about 5 minutes, by hot air convection, with particular air vortices, and radiation, and it has then been kept at about 210-220°C for about 60 minutes, a final grill heating step having followed, for a duration of about 4 minutes.

The so-prepared bread was characterized by having organoleptic-structural characteristics being absolutely similar to those of a bread produced by an artisan bakery, with particular reference to the crust crunchiness, which could be felt by the touch and heard, the typically amber-coloured crust colouring, the open and irregular alveolation and the softness.

### EXAMPLE 2 - Soft wheat focaccia

A focaccia-or-pizza-mix preparation has been used, comprising, within a polyethylene food package, having externally an RFID label, 350 grams of a mixture based on 0-type soft wheat flour (330 grams) and also comprising dextrose (8 grams), salt (7 grams) and powdered sourdough (5 grams).

Actions have been taken in the same way as in the previous example up to the mixing step, performing the steps of introducing the ingredients (those contained in the above package and powdered dehydrated natural yeast) into the container 10, adding water and mixing, according to the instructions set in the RFID label. In particular, water addition (190 grams) has been carried out in a period of about 90 seconds, the first slow mixing step has been performed at 40 rpm for 4 minutes; the second fast mixing step at 90 rpm for 25 minutes and the third slow mixing step at 40 rpm for 2 minutes.

The dough has been left to rest at room temperature for 30 minutes, afterwards it has been transferred from the container 10 into a rectangular baking tray, laying it on the baking tray so as to coat the inner surface of the latter as a uniform layer. The baking tray has been introduced into the preparation and baking chamber 10 for the leavening step, carried out at 35°C for 60 minutes.

Afterwards, the temperature of the preparation and baking chamber has been brought in about 5 minutes to above 180°C, by hot air convection, with particular air vortices, and radiation, and it has then been kept at about 200°C for about 30 minutes, a final grill heating step having followed, for a duration of about 3 minutes.

The final focaccia had a uniformly browned surface and softness features which are quite comparable with those of similar focaccias produced in traditional bakeries.

### EXAMPLE 3 "Margherita" cake

A mix for preparing cakes from batters has been used, comprising, within a polyethylene food package, having externally an RFID label, 350 grams of a mixture based on 0-type soft wheat flour (120 grams) and also comprising sugar (140 grams), wheat starch (25 grams), potato starch (45 grams), powdered milk (6 grams), low-fat cocoa powder (5 grams) (for the cocoa base), leavening agents (composed of gluconodeltalactone, sodium acid carbonate and disodium diphosphate) (5,5 grams), milk proteins (0,5 g), salt (2,7 grams) and flavourings (0,3 grams).

First of all, the ingredients contained in the above-mentioned package have been put into the container 10, adding some softened butter (120 grams) and fresh eggs (60 grams). Water addition has been performed, automatically and as set by the instructions of the RFDI label (60 grams), in a time of about 60 seconds. The mixing has been performed in three steps: the first slow mixing step has been performed at 40 rpm for 4 minutes, the second fast mixing step at 90 rpm for 12 minutes and the third slow mixing step at 40 rpm for 3 minutes.

Finally, after a short reverse mixing step at 80 rpm for 3 minutes, the temperature of the preparation and baking chamber has been brought in about 4 minutes above 160°C, by hot air convection, with particular air vortices, and radiation, and it has then been kept at about 175°C for about 50 minutes.

## Claims

1. A process for preparing and baking bakery products comprising the steps of:
a) providing an apparatus (1) for the completely automated processing and subsequent baking of a preparation (100) of base ingredients for bakery products, comprising a chamber (60) for preparing and baking the preparation, mixing means (15) operating within said preparation and baking chamber, heating means (30) of said preparation and baking chamber and control means (40), said apparatus also comprising means for delivering a liquid (80) into said preparation and baking chamber, and reading means (102) directly associated to said apparatus;
b) acquiring a plurality of preparation parameters stored on a support (101) associated with said preparation (100) by means of said reading means (102);
c) transmitting said plurality of acquired preparation parameters to said control means (40);
d) putting the ingredients of the preparation (100) into said preparation and baking chamber (60);
e) operating, through said control means (40), said liquid delivery means (80) in order to introduce a quantity of liquid identified by the preparation parameters into said preparation and baking chamber;
f) operating, through said control means (40), said mixing means (15), to obtain a mixture from the ingredients and the liquid introduced into the preparation and baking chamber (60);
g) operating, through said control means (40), said heating means (30) according to modes identified by said preparation parameters, to bake the previously obtained mixture;
wherein:
said step f) of operating said mixing means (15) brings about the execution of a first slow mixing step f') for 2-8 minutes at 20-40 rpm, a second fast mixing step f") for 20-40 minutes at 60-100 rpm e and third slow mixing step f''' for 2-4 minutes at 20-40 rpm.

2. The process according to claim 1, wherein said step g) of operating said heating means (30) involves a starting step of fast thermal increase in order to bring the temperature of said preparation and baking chamber (60) to 165°C-220°C.

3. The process according to claim 1 or 2, wherein said preparation (100) of base ingredients for bakery products comprises, within a package being externally provided with said support (101) whereon said preparation parameters are stored, at least one cereal meal and salt, and optionally further ingredients varying according to the bakery product to be prepared.

4. The process according to any of the previous claims, comprising, between said step f) of operating the mixing means (15) and said step g) of operating the heating means (30), a step of resting and leavening of the mixture inside said preparation and baking chamber (60), carried out at 30-38°C for a period of 60-180 minutes.

5. The process according to any of the previous claims, wherein said bakery products consist of bread or focaccias and said cereal meal is based on soft or durum wheat and may optionally also comprise one or more further ingredients selected from the group consisting of meals of other cereals, such as barley, rice, corn, rye, oats, spelt and kamut, legume flours, particularly soya, dextrose, dextrins, malt and powdered sourdough.

6. The process according to any of claims 1 to 4, wherein said bakery products are cakes or similar confectionery products and said preparation (100) comprises at least one cereal meal, salt and sugar and one or more ingredients selected from the group comprising starch, particularly wheat or corn starch, potato starch, powdered milk, low-fat cocoa powder, natural flavourings, milk proteins and baking powder.

7. The process according to any of the previous claims, wherein said preparation parameters identify the mixing and heating times and modes within the preparation and baking chamber (60).

8. The process according to any of the previous claims, wherein said preparation parameters identify the leavening times of said mixture

9. The process according to any of the previous claims, wherein said preparation parameters identify the quantity of liquid to be added to the ingredients of said preparation (100) in order to obtain said mixture.

10. The process according to any of the previous claims, wherein said liquid delivery means (80) comprise a liquid tank (82), being connected to the preparation and baking chamber (60) by means of a duct (83), and a pump (81) for feeding the liquid through said duct (83) towards said preparation and baking chamber (60)

11. The process according to any of the previous claims, wherein the addition of said liquid, consisting of water, is performed at the beginning of the mixing step in a period comprised between 30 and 180 seconds.

12. The process according to any of the previous claims, wherein said reading means (102) directly associated to the apparatus comprise an RFID reader and the support (101) associated to said preparation comprises an RFID label.

13. The process according to any of the previous claims, wherein said processing means comprise a mixing blade (11) which can be rotationally operated within the container (10), the container (10) being provided, along an inner profile thereof, with shaped impressions (10b) suitable to cooperate with said mixing blade (11) in order to improve the mixing, said rotation occurring along an axis of rotation (X) that is perpendicular to a bottom plane thereof (10a), said mixing blade (11) being hinged near the bottom plane (10a) of said container along a hinging axis (Y) that is perpendicular to the axis of rotation (X) by means of a hinge (12), said hinge (12) allowing the mixing blade (11) to move angularly from an operational position wherein the mixing blade (11) stands upright with respect to the bottom plane (10a) of the container (10) and a rest position wherein the mixing blade (11) lies on the bottom plane (10a) of the container (10) and vice versa, retaining means being arranged to limit said angular movement to prevent the mixing blade (11) from rotating with respect to the hinging axis (Y) beyond the operation position.

14. A system for carrying out the process according to any of claims 1 to 13, comprising a preparation (100) of base ingredients for bakery products to which a support (101) is associated, whereon a plurality of preparation parameters are stored, and an apparatus (1) for the completely automated processing and subsequent baking of said preparation (100), comprising a chamber for preparing and baking the preparation (60), mixing means (15) operating within said preparation and baking chamber, heating means (30) of said preparation and baking chamber and control means (40), this apparatus also comprising means for deliverying a liquid (80) into said preparation and baking chamber and reading means (102) directly associated to said apparatus, arranged to acquire said plurality of parameters stored on said support (101).

15. The system according to claim 14, wherein said support (101) comprises an RFID label, on which there are stored data that are specific of the preparation (100) to which it is applied, said specific data comprising data relating to the modes for performing the mixing steps (f'-f''').

16. The system according to claim 15, wherein said specific data further comprise data relating to the modes for performing the starting step of fast thermal increase according to claim 2.

17. The system according to claim 16, wherein said specific data further comprise data relating to the modes for performing the steps of resting and leavening steps according to claim 3.

18. The system according to any of claims 15 to 17, wherein said specific data further comprise data relating to the modes for performing liquid addition according to claim 10 and to the quantity of liquid to be added.
